(19) **Europäisches Patentamt / European Patent Office / Office européen des brevets**

(11) **EP 3 859 855 A1**

(12) **EUROPEAN PATENT APPLICATION**
published in accordance with Art. 153(4) EPC

(43) Date of publication:
**04.08.2021 Bulletin 2021/31**

(21) Application number: **18934953.3**

(22) Date of filing: **27.09.2018**

(51) Int Cl.:
**H01M 10/052** (2010.01)  **H01M 4/36** (2006.01)
**H01M 4/48** (2010.01)  **H01M 4/485** (2010.01)
**H01M 4/58** (2010.01)  **H01M 10/0566** (2010.01)

(86) International application number:
**PCT/JP2018/035975**

(87) International publication number:
**WO 2020/065833 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Murata Manufacturing Co., Ltd.**
  **Nagaokakyo-shi, Kyoto 617-8555 (JP)**
- **Hydro-Québec**
  **Montréal QC H2Z 1A4 (CA)**

(72) Inventors:
- **TSUIKI, Hirofumi**
  **Nagaokakyo-shi, Kyoto 617-8555 (JP)**

- **ASAKAWA, Yuichiro**
  **Nagaokakyo-shi, Kyoto 617-8555 (JP)**
- **UENO, Hiroshi**
  **Nagaokakyo-shi, Kyoto 617-8555 (JP)**
- **ASSRESAHEGN DESALEGN, Birhanu**
  **Quebec, J3X 1S1 (CA)**
- **GENDRON, Frederic**
  **Quebec, J3X 1S1 (CA)**
- **ZAGHIB, Karim**
  **Quebec, J3X 1S1 (CA)**

(74) Representative: **Witte, Weller & Partner**
**Patentanwälte mbB**
**Postfach 10 54 62**
**70047 Stuttgart (DE)**

(54) **SECONDARY BATTERY**

(57)     A secondary battery includes a positive electrode, a negative electrode, and an electrolytic solution. The positive electrode includes primary particles that each include a lithium-manganese phosphate compound and that have an average particle diameter of less than or equal to 100 nm. The negative electrode has an electrochemical capacity per unit area of less than or equal to an electrochemical capacity per unit area of the positive electrode.

[ FIG. 1 ]

FIG. 1

**Description**

Technical Field

The technology relates to a secondary battery including a positive electrode, a negative electrode, and an electrolytic solution.

Background Art

Various electronic apparatuses such as mobile phones have been widely used. Such widespread use has promoted the development of a secondary battery that is smaller in size and lighter in weight and allows for a higher energy density, as a power source.

The secondary battery includes a positive electrode, a negative electrode, and an electrolytic solution. A configuration of the secondary battery greatly influences battery characteristics. Accordingly, various considerations have been given to the configuration of the secondary battery. Specifically, in order to achieve stable charge and discharge cycle performance, primary particles of a lithium phosphate compound are each covered with an electron-conductive material containing carbon, and the primary particles of the lithium phosphate compound are joined to each other with the electron-conductive material therebetween (for example, see PTL 1).

Citation List

Patent Literature

PTL 1: Japanese Unexamined Patent Application Publication No. 2012-104290

Summary of the Invention

Electronic apparatuses, on which a secondary battery is to be mounted, are increasingly gaining higher performance and more functions, causing more frequent use of such electronic apparatuses and expanding a use environment of the electronic apparatuses. Accordingly, there is still room for improvement in terms of battery characteristics of the secondary battery.

The technology has been made in view of such an issue and it is an object of the technology to provide a secondary battery that is able to achieve a superior battery characteristic.

A secondary battery according to an embodiment of the technology includes a positive electrode, a negative electrode, and an electrolytic solution. The positive electrode includes primary particles that each include a lithium-manganese phosphate compound and that have an average particle diameter of less than or equal to 100 nanometers. The negative electrode has an electrochemical capacity per unit area of less than or equal to an electrochemical capacity per unit area of the positive electrode. The lithium-manganese phosphate compound is represented by Formula (1) below.

$$Li_xMn_yM1_{1-y}PO_4 \ ...... \qquad (1)$$

where:

M1 is at least one of magnesium (Mg), aluminum (Al), boron (B), cobalt (Co), chromium (Cr), copper (Cu), molybdenum (Mo), nickel (Ni), silicon (Si), tin (Sn), strontium (Sr), titanium (Ti), vanadium (V), tungsten (W), zinc (Zn), zirconium (Zr), or iron (Fe); and
x and y satisfy $0 < x < 1.2$ and $0 < y \leq 1$.

According to the secondary battery of the present technology, in the case where the electrochemical capacity per unit area of the negative electrode is less than or equal to the electrochemical capacity per unit area of the positive electrode, the primary particles included in the positive electrode each include the lithium-manganese phosphate compound, and the average particle diameter of the primary particles is less than or equal to 100 nm. This makes it possible to achieve a superior battery characteristic.

Note that effects of the technology are not necessarily limited to those described above and may include any of a series of effects described below in relation to the technology.

Brief Description of Drawings

[FIG. 1] FIG. 1 is a sectional view of a configuration of a secondary battery (cylindrical type) according to one embodiment of the technology.
[FIG. 2] FIG. 2 is an enlarged sectional view of a configuration of a main part of the secondary battery illustrated in FIG. 1.
[FIG. 3] FIG. 3 is a schematic sectional view of a configuration of positive electrode active material particles.
[FIG. 4] FIG. 4 is a schematic sectional view of another configuration of the positive electrode active material particles.
[FIG. 5] FIG. 5 is a schematic sectional view of a configuration of positive electrode active material particles of a comparative example.
[FIG. 6] FIG. 6 is a sectional diagram for describing a method of measuring a particle diameter of the positive electrode active material particle.
[FIG. 7] FIG. 7 is a perspective view of a configuration of another secondary battery (laminated-film type) according to one embodiment of the technology.
[FIG. 8] FIG. 8 is an enlarged sectional view of a configuration of a main part of the secondary battery illustrated in FIG. 7.
[FIG. 9] FIG. 9 is a sectional view of a configuration of a test secondary battery (coin type).
[FIG. 10] FIG. 10 is a diagram illustrating a discharge curve.

Modes for Carrying Out the Invention

Some embodiments of the technology are described below in detail with reference to the drawings. The description is given in the following order.

1. Secondary Battery (Cylindrical Type)

1-1. Configuration
1-2. Operation
1-3. Manufacturing Method

1-3-1. Method of Manufacturing Positive Electrode Active Material
1-3-2. Method of Manufacturing Secondary Battery

1-4. Action and Effects

2. Secondary Battery (Laminated-film Type)

2-1. Configuration
2-2. Operation
2-3. Manufacturing Method
2-4. Action and Effects

3. Modifications
4. Applications of Secondary Battery

<1. Secondary Battery (Cylindrical Type)>

A description is given first of a secondary battery according to an embodiment of the technology.
The secondary battery described here includes a positive electrode 21 and a negative electrode 22, as will be described later. This secondary battery is, for example, a lithium-ion secondary battery that obtains a battery capacity, more specifically, a capacity of the negative electrode 22, by utilizing insertion and extraction of lithium.

<1-1. Configuration>

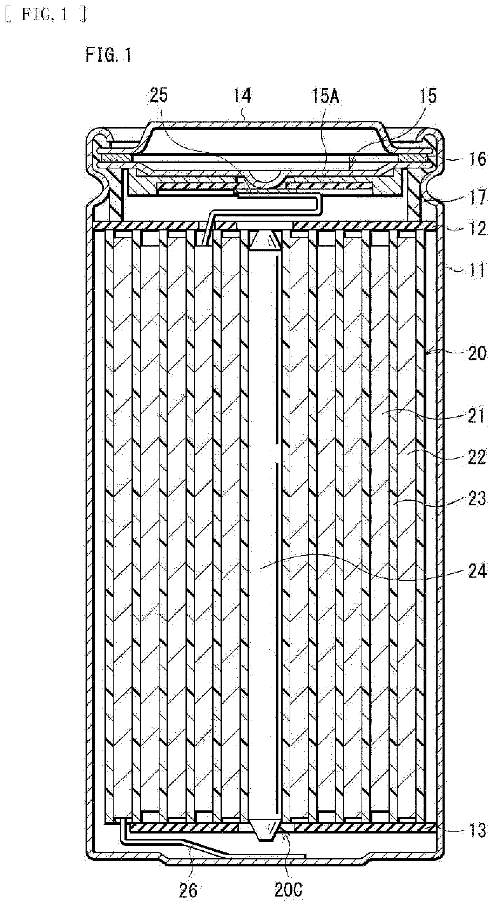

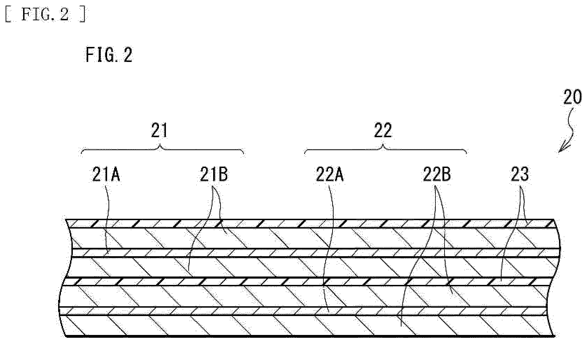

FIG. 1 illustrates a sectional configuration of the secondary battery. FIG. 2 illustrates an enlarged sectional configuration of a main part, that is, a wound electrode body 20, of the secondary battery illustrated in FIG. 1. Note that FIG. 2 illustrates only a part of the wound electrode body 20.

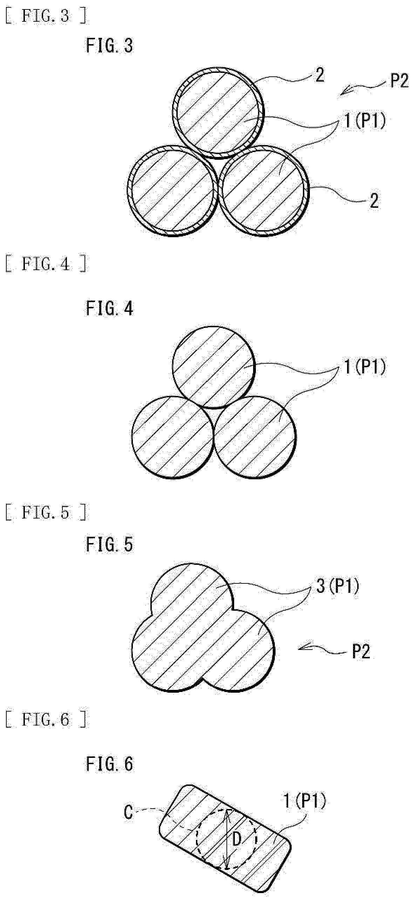

FIGs. 3 and 4 each schematically illustrate a sectional configuration of positive electrode active material particles 1. FIG. 5 schematically illustrates a sectional configuration of positive electrode active material particles 3 of a comparative example. FIG. 6 schematically illustrates a sectional configuration of one positive electrode active material particle 1 (a primary particle PI) for describing a method of measuring a particle diameter of the positive electrode active material particle 1.

Referring to FIG. 1, this secondary battery is of a cylindrical type, for example. The secondary battery of the cylindrical type includes a cylindrical battery can 11 containing a battery device (the wound electrode body 20).

Specifically, the secondary battery includes, for example, a pair of insulating plates 12 and 13 and the wound electrode body 20 that are provided inside the battery can 11. The wound electrode body 20 is a structure in which, for example, the positive electrode 21 and the negative electrode 22 are stacked on each other with a separator 23 interposed therebetween, and also in which the stack of the positive electrode 21, the negative electrode 22, and the separator 23 is wound. The wound electrode body 20 is impregnated with an electrolytic solution. The electrolytic solution is a liquid electrolyte.

The battery can 11 has a hollow cylindrical structure with a closed end and an open end, for example, and includes a metal material such as iron. The battery can 11 has a surface that may be plated with, for example, a metal material such as nickel. The insulating plate 12 and the insulating plate 13 are disposed in such a manner as to interpose the wound electrode body 20 therebetween, for example.

For example, a battery cover 14, a safety valve mechanism 15, and a positive temperature coefficient device (a PTC device) 16 are crimped onto the open end of the battery can 11 by means of a gasket 17. The open end of the battery can 11 is thereby sealed. The battery cover 14 includes a material similar to a material forming the battery can 11, for example. The safety valve mechanism 15 and the positive temperature coefficient device 16 are disposed on an inner side of the battery cover 14. The safety valve mechanism 15 is electrically coupled to the battery cover 14 via the positive temperature coefficient device 16. For example, when an internal pressure of the battery can 11 reaches a certain level or higher due to a factor such as an internal short circuit or heating from outside, a disk plate 15A inverts in the safety valve mechanism 15, thereby cutting off the electrical coupling between the battery cover 14 and the wound electrode body 20. In order to prevent abnormal heat generation resulting from a large current, the positive temperature coefficient device 16 increases in electrical resistance with a rise in temperature. The gasket 17 includes an insulating material, for example. The gasket 17 has a surface on which a material such as asphalt may be applied, for example.

A center pin 24 is provided in a space 20C provided at the winding center of the wound electrode body 20, for example. Note, however, that the center pin 24 may not be provided in the space 20C, for example. A positive electrode lead 25 is coupled to the positive electrode 21. The positive electrode lead 25 includes, for example, an electrically conductive material such as aluminum. The positive electrode lead 25 is electrically coupled to the battery cover 14 via the safety valve mechanism 15, for example. A negative electrode lead 26 is coupled to the negative electrode 22. The negative electrode lead 26 includes, for example, an electrically conductive material such as nickel. The negative electrode lead 26 is electrically coupled to the battery can 11, for example.

[Positive Electrode]

As illustrated in FIG. 2, the positive electrode 21 includes, for example, a positive electrode current collector 21A, and a positive electrode active material layer 21B provided on the positive electrode current collector 21A. The positive electrode active material layer 21B may be provided on only one side of the positive electrode current collector 21A, or may be provided on each of both sides of the positive electrode current collector 21A, for example. FIG. 2 illustrates an example case where the positive electrode active material layer 21B is provided on each of both sides of the positive electrode current collector 21A.

The positive electrode current collector 21A includes, for example, an electrically conductive material such as aluminum. The positive electrode active material layer 21B includes the positive electrode active material particles 1 that are the primary particles P1, as illustrated in FIG. 3. The positive electrode active material particles 1 each include one or more of positive electrode materials into which lithium is insertable and from which lithium is extractable. The positive electrode active material layer 21B may further include one or more of other materials including, without limitation, a positive electrode binder and a positive electrode conductor.

The positive electrode materials include one or more of lithium-manganese phosphate compounds represented by Formula (1) below. A reason for this is that the lithium-manganese phosphate compounds are markedly stable upon charging and discharging, thus facilitating smooth and stable proceeding of charging and discharging reactions.

$$\mathrm{Li}_x\mathrm{Mn}_y\mathrm{M1}_{1-y}\mathrm{PO}_4 \ \text{......} \qquad (1)$$

where:

M1 is at least one of magnesium (Mg), aluminum (Al), boron (B), cobalt (Co), chromium (Cr), copper (Cu), molybdenum (Mo), nickel (Ni), silicon (Si), tin (Sn), strontium (Sr), titanium (Ti), vanadium (V), tungsten (W), zinc (Zn), zirconium (Zr), or iron (Fe); and

x and y satisfy $0 < x < 1.2$ and $0 < y \leq 1$.

The lithium-manganese phosphate compound represented by Formula (1) is a phosphate compound including lithium (Li) and manganese (Mn) as constituent elements. Note that, as can be appreciated from Formula (1), the lithium-manganese phosphate compound may further include one or more of additional metal elements (M1).

Specifically, examples of the lithium-manganese phosphate compound not including any additional metal element (M1) include $LiMn_{0.50}Co_{0.50}PO_4$, $LiMn_{0.30}Co_{0.70}PO_4$, $LiMn_{0.5}Fe_{0.5}PO_4$, $LiMn_{0.7}Fe_{0.3}PO_4$, and $LiMn_{0.75}Fe_{0.25}PO_4$. Examples of the lithium-manganese phosphate compound including one or more additional metal elements (M1) include $LiMn_{0.70}Fe_{0.27}Mg_{0.03}PO_4$, $LiMn_{0.85}Fe_{0.10}Mg_{0.05}PO_4$, and $LiMn_{0.75}Fe_{0.20}Mg_{0.04}Co_{0.01}PO_4$.

As described above, the one or more additional metal elements (M1) may be any one or more metal elements such as magnesium, and are not limited to a particular kind. That is, the lithium-manganese phosphate compound may include only one additional metal element (M1) or two or more additional metal elements (M1).

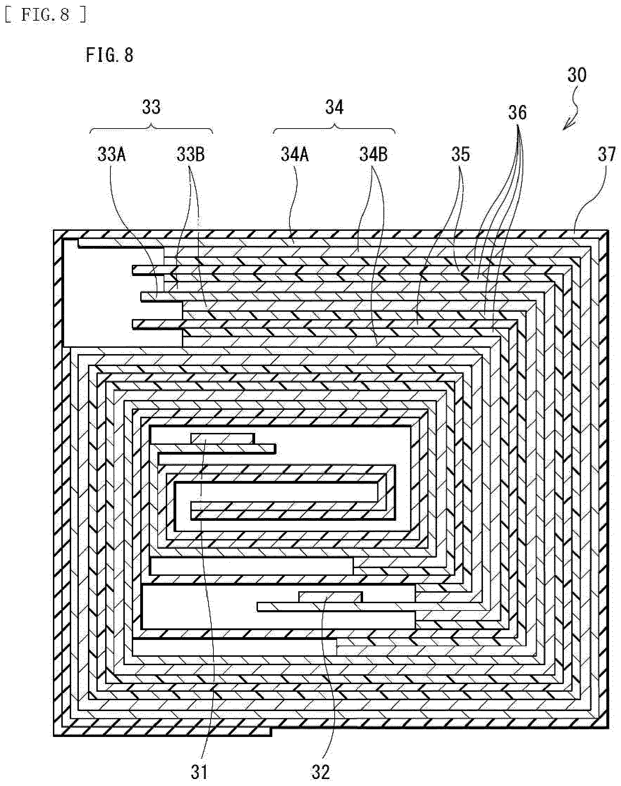

A value of y in Formula (1) is not particularly limited as long as y satisfies $0 < y << 1$. It is preferable that y satisfy $y \geq 0.5$, in particular. A reason for this is that, as will be described later, in a discharge curve having a horizontal axis representing a depth of discharge (%) and a vertical axis representing a discharge voltage (V), a range associated with a reduction reaction of manganese ($Mn^{3+} \rightarrow Mn^{2+}$), which is referred to as a discharge region R1, is extended, that is, a range where the discharge voltage inherently tends to drop is extended, and accordingly, a drop in the discharge voltage is effectively suppressed over that extended range (see FIG. 8).

The positive electrode active material particles 1 (the primary particles PI) are controlled to have a markedly small average particle diameter (nm). Specifically, the average particle diameter is less than or equal to 100 nm. A reason for this is that advantages described below are obtained if the average particle diameter of the positive electrode active material particles 1 (lithium-manganese phosphate compound) is less than or equal to 100 nm under a condition that, as will be described later, an electrochemical capacity per unit area of the negative electrode 22 is less than or equal to an electrochemical capacity per unit area of the positive electrode 21.

A first advantage is that the positive electrode active material particles 1 each suffer less stress upon insertion and extraction of lithium. A second advantage is that a potential of the positive electrode 21 at the time of the charging decreases and therefore an irreversible change, that is, degradation, of each of the positive electrode active material particles 1 is suppressed. A third advantage is that a lithium diffusion path inside each of the positive electrode active material particles 1 is shortened and therefore an electrical resistance of each of the positive electrode active material particles 1 is reduced. As a result, even in a case of using the positive electrode active material particles 1 including the lithium-manganese phosphate compound, the discharge voltage does not drop easily, with the electrical resistance being reduced. More specifically, the discharge voltage does not drop easily even upon repeated charging and discharging, or even upon increasing a current value at the time of the discharging.

In particular, it is preferable that the average particle diameter of the positive electrode active material particles 1 be less than or equal to 60 nm. A reason for this is that the irreversible degradation of each of the positive electrode active material particles 1 is further suppressed, and the electrical resistance of each of the positive electrode active material particles 1 is further reduced, thus suppressing a drop in the discharge voltage further.

An example procedure for determining the average particle diameter of the positive electrode active material particles 1 is as described below. First, the secondary battery is disassembled in an inert gas atmosphere to thereby take out the positive electrode 21. Although not particularly limited, the inert gas atmosphere includes one or more of inert gases including, without limitation, an argon gas and a nitrogen gas, for example. Thereafter, the positive electrode active material layer 21B is removed from the positive electrode current collector 21A, following which the positive electrode active material layer 21B is put into an organic solvent. The organic solvent is not limited to a particular kind, and examples thereof include N-methyl-2-pyrrolidone. Soluble components such as the positive electrode binder are thereby dissolved and removed, and as a result, the positive electrode active material particles 1, which are insoluble, are collected.

Thereafter, in the same atmosphere, the positive electrode active material particles 1 are microscopically observed to obtain a micrograph thereof. Although not particularly limited, one or more of types of microscopes including, without limitation, a scanning electron microscope (SEM), a transmission electron microscope (TEM), and a scanning transmission electron microscope (STEM), for example, are used. A magnification for the observation is, for example, 100,000 to 500,000 times, and is not particularly limited thereto. In the micrograph, as illustrated in FIG. 3, the positive electrode active material particles 1, i.e., the primary particles P1, are observed and secondary particles P2 are also observed. Each of the secondary particles P2 is an aggregate of two or more of the primary particles P1.

Thereafter, on the basis of the micrograph, particle diameters of any hundred of the positive electrode active material particles 1 are measured. In this case, for example, any ten of the secondary particles P2 are chosen and then the particle diameters of ten of the primary particles P1 are measured for each of the secondary particles P2 to thereby obtain the particle diameters of a hundred of the primary particles P1. It is to be noted that, if any of the primary particles P1 is not circular in shape, for example, as illustrated in FIG. 6, a circle C inscribed in the outer edge (contour) of the primary particle P1 is identified and a diameter D of the circle C is assumed to be the particle diameter. FIG. 6 illustrates an example case where the primary particle P1 has a generally rectangular shape. Lastly, an average value of the particle diameters of the hundred primary particles P1 is calculated to obtain the average particle diameter.

A method of manufacturing the positive electrode active material particles 1 is not particularly limited. For example, one or more of methods including, without limitation, a hydrothermal synthesis method and a solid-phase synthesis method, are usable. In a process of manufacturing the positive electrode active material particles 1, as will be described later, raw materials for synthesizing the lithium-manganese phosphate compound and a carbon source for forming a carbon material 2 to be described later are used, for example. In this case, the lithium-manganese phosphate compound is synthesized. Further, as necessary, the carbon source is carbonized on the surface of the lithium-manganese phosphate compound to form the carbon material 2. The positive electrode active material particles 1 are thereby obtained.

The raw materials described above are two or more compounds each containing one or more of a series of constituent elements of the lithium-manganese phosphate compound. Specifically, examples of the raw materials include a lithium-containing compound as a source of lithium, a manganese-containing compound as a source of manganese, and a phosphate compound as a source of phosphate ions. Note that one compound may serve as sources of two or more of the constituent elements. Although not limited to a particular kind, the lithium-containing compound and the manganese-containing compound may each be, for example, a sulfate, a nitrate, an acetate or the like, and may also be a hydrate. The phosphate compound is not limited to a particular kind, and examples thereof include a phosphoric acid.

Examples of the carbon source include sucrose. Note that the carbon material 2 allows the positive electrode active material particles 1 (the primary particles PI) to adhere to each other to form the secondary particles P2 while helping to prevent the positive electrode active material particles 1 from sintering together. Further, the carbon material 2 imparts electron conductivity to the surfaces of the positive electrode active material particles 1 (the primary particles PI), and supplies electrons into the secondary particles P2.

More specifically, in the process of manufacturing the positive electrode active material particles 1, for example, the positive electrode active material particles 1 (the primary particles PI) including the lithium-manganese phosphate compound are synthesized as illustrated in FIG. 4, and the carbon source is carbonized on the surfaces of the positive electrode active material particles 1. As a result, as illustrated in FIG. 3, a part or all of the surface of each of the positive electrode active material particles 1 is covered with the carbon material 2, and the positive electrode active material particles 1 gather closely together in a state of being separated from each other by the carbon material 2 therebetween. The positive electrode active material particles 1 covered with the carbon material 2 thus adhere to each other to thereby form the secondary particles P2.

For simplification of illustration, FIGs. 3 and 4 each illustrate three positive electrode active material particles 1 (primary particles PI) and a single secondary particle P2 formed by the three positive electrode active material particles 1. The description here also applies to FIG. 5.

In this case, as described above, the positive electrode active material particles 1 are separated from each other by the carbon material 2 therebetween even in a state where the secondary particles P2 are formed. This allows the contour (occupation range) of each of the positive electrode active material particles 1 to be recognizable in the micrograph described above, thus making it possible to identify the individual positive electrode active material particles 1. As a result, even after the formation of the secondary particles P2, it is possible to measure the particle diameter of each of the positive electrode active material particles 1 and therefore the average particle diameter of the positive electrode active material particles 1 is determinable.

In contrast, if secondary particles P2 are formed by a similar procedure except that no carbon source is used for the sake of comparison, the positive electrode active material particles 1 gather closely together in a state of not being separated from each other, and consequently, as illustrated in FIG. 5, for example, such positive electrode active material particles 1 adhere to each other, that is, sinter together. As a result, after the secondary particles P2 are formed, the individual positive electrode active material particles 1 are no longer identifiable, and therefore the average particle diameter of the average particle diameter of the positive electrode active material particles 1 is not determinable.

As described here, in the case where the carbon source is used in the process of manufacturing the positive electrode active material particles 1, the secondary particles P2 are formed by the positive electrode active material particles 1 through the use of the carbon material 2. The formation state of the positive electrode active material particles 1 is thereby controlled to allow the average particle diameter to be determinable even after the formation of the secondary particles P2 as described above. The average particle diameter (nm) of the positive electrode active material particles 1 is thus controlled to be less than or equal to 100 nm.

In the case where the positive electrode active material particles 1 are manufactured with the carbon source and the secondary particles P2 are formed by such positive electrode active material particles 1, the secondary particles P2 include the carbon material 2, as described above.

Although not particularly limited, a content of the carbon material 2 in the secondary particles P2 is preferably from 1.4 wt% to 4.8 wt%, both inclusive, among others. A reason for this is that the amount of formation of the carbon material 2 is thereby made appropriate, and as a result, it becomes easier for the secondary particles P2 to be formed by the positive electrode active material particles 1 that are separated from each other by the carbon material 2 therebetween, while inhibition of insertion and extraction of lithium is suppressed.

More specifically, in a case where the content of the carbon material 2 is less than 1.4 wt%, it can become harder for the positive electrode active material particles 1 to be separated from each other by the carbon material 2 therebetween due to the amount of formation of the carbon material 2 being excessively small. In contrast, in a case where the content of the carbon material 2 is higher than 4.8 wt%, it can become harder for lithium ions to get in and out of each of the positive electrode active material particles 1 due to the amount of formation of the carbon material 2 being excessively large.

It is to be noted that the positive electrode active material layer 21B may further include, for example, one or more of other positive electrode materials. However, the lithium-manganese phosphate compounds described above are excluded from the other positive electrode materials described below.

Specifically, the other positive electrode materials include a lithium compound. The term "lithium compound" is a generic term for a compound that includes lithium as a constituent element. A reason for this is that a high energy density is achievable. The lithium compound is not limited to a particular kind, and examples thereof include a lithium composite oxide and a lithium phosphate compound.

The term "lithium composite oxide" is a generic term for an oxide that includes lithium and one or more of other elements as constituent elements. The lithium composite oxide has any of crystal structures including, without limitation, a layered rock-salt crystal structure and a spinel crystal structure, for example. The term "lithium phosphate compound" is a generic term for a phosphate compound that includes lithium and one or more of the other elements as constituent elements. The lithium phosphate compound has a crystal structure such as an olivine crystal structure, for example.

The other elements are elements other than lithium. The other elements are not limited to a particular kind; however, it is preferable that the other elements belong to groups 2 to 15 in the long periodic table of elements, in particular. A reason for this is that a higher voltage is obtainable. Specific examples of the other elements include nickel, cobalt, manganese, and iron.

Examples of the lithium composite oxide having the layered rock-salt crystal structure include $LiNiO_2$, $LiCoO_2$, $LiCo_{0.98}Al_{0.01}Mg_{0.01}O_2$, $LiNi_{0.5}Co_{0.2}Mn_{0.3}O_2$, $LiNi_{0.8}Co_{0.15}Al_{0.05}O_2$, $LiNi_{0.33}Co_{0.33}Mn_{0.33}O_2$, $Li_{1.2}Mn_{0.52}Co_{0.175}Ni_{0.1}O_2$, and $Li_{1.15}(Mn_{0.65}Ni_{0.22}Co_{0.13})O_2$. Examples of the lithium composite oxide having the spinel crystal structure include $LiMn_2O_4$. Examples of the lithium phosphate compound having the olivine crystal structure include $LiFePO_4$.

The positive electrode binder includes materials including, without limitation, a synthetic rubber and a polymer compound, for example. Examples of the synthetic rubber include a styrene-butadiene-based rubber. Examples of the polymer compound include polyvinylidene difluoride and polyimide.

The positive electrode conductor includes, for example, an electrically conductive material such as a carbon material. Examples of the carbon material include graphite, carbon black, acetylene black, and Ketjen black. The carbon material may also be a carbon nanotube or a carbon nanofiber. The positive electrode conductor may include a material such as a metal material or an electrically conductive polymer.

[Negative Electrode]

As illustrated in FIG. 2, the negative electrode 22 includes, for example, a negative electrode current collector 22A, and a negative electrode active material layer 22B provided on the negative electrode current collector 22A. The negative electrode active material layer 22B may be provided on only one side of the negative electrode current collector 22A, or may be provided on each of both sides of the negative electrode current collector 22A, for example. FIG. 2 illustrates an example case where the negative electrode active material layer 22B is provided on each of both sides of the negative electrode current collector 22A.

The negative electrode current collector 22A includes, for example, an electrically conductive material such as copper. It is preferable that the negative electrode current collector 22A have a surface roughened by a method such as an electrolysis method. A reason for this is that improved adherence of the negative electrode active material layer 22B to the negative electrode current collector 22A is achievable by utilizing a so-called anchor effect.

The negative electrode active material layer 22B includes, as a negative electrode active material, one or more of negative electrode materials into which lithium is insertable and from which lithium is extractable. The negative electrode active material layer 22B may further include another material, examples of which include a negative electrode binder and a negative electrode conductor.

Here, the electrochemical capacity per unit area of the negative electrode 22 is less than or equal to the electrochemical capacity per unit area of the positive electrode 21. Therefore, a so-called end-of-charge electrode of the secondary battery is the negative electrode 22. In other words, a chargeable capacity of the negative electrode material included in the negative electrode 22 is equivalent to or less than a discharge capacity of the positive electrode 21. Therefore, whether or not a charging reaction of the secondary battery is to end is determined in accordance with the chargeable capacity of the negative electrode 22 serving as the end-of-charge electrode. A reason for this is that, as described above, the potential of the positive electrode 21 at the time of the charging decreases and irreversible degradation of each of the positive electrode active material particles 1 is thus suppressed.

More specifically, the electrochemical capacity per unit area of the negative electrode 22 being less than or equal to the electrochemical capacity per unit area of the positive electrode 21 means that two conditions described below are satisfied. In the following, a series of capacities (charge capacity and discharge capacity) related to charging and discharging of the secondary battery will be first defined and then the two conditions will be described.

First, a series of capacities (charge capacities and discharge capacities) related to the positive electrode 21 is as follows.

Initial-cycle charge capacity Qc1 per unit area (mAh/cm$^2$) of positive electrode 21 = [initial-cycle charge capacity qc1 (mAh/g) of positive electrode active material × ratio rc of positive electrode active material to positive electrode active material layer 21B × area density lc (mg/cm$^2$) of positive electrode active material layer 21B] / 1000.

Initial-cycle discharge capacity Qc1' per unit area (mAh/cm$^2$) of positive electrode 21 = [initial-cycle charge capacity qc1 (mAh/g) of positive electrode active material × initial-cycle charge-discharge efficiency Ec1 of positive electrode 21 × ratio rc of positive electrode active material to positive electrode active material layer 21B × area density lc (mg/cm$^2$) of positive electrode active material layer 21B] / 1000.

Second- or subsequent-cycle charge capacity QcN per unit area (mAh/cm$^2$) of positive electrode 21 = [initial-cycle discharge capacity Qc1' per unit area (mAh/g) of positive electrode 21 × charge-discharge efficiency EcN of positive electrode 21] / 1000.

Second- or subsequent-cycle discharge capacity QcN' per unit area (mAh/cm$^2$) of positive electrode 21 = [immediately-preceding-cycle charge capacity QcN per unit area of positive electrode 21 × charge-discharge efficiency EcN of positive electrode 21] / 1000.

Further, a series of capacities (charge capacities and discharge capacities) related to the negative electrode 22 is as follows.

Initial-cycle charge capacity Qa1 per unit area ($mAh/cm^2$) of negative electrode 22 = [initial-cycle charge capacity qa1 (mAh/g) of negative electrode active material × ratio ra of negative electrode active material to negative electrode active material layer 22B × area density la ($mg/cm^2$) of negative electrode active material layer 22B] / 1000.

Initial-cycle discharge capacity Qa1' per unit area ($mAh/cm^2$) of negative electrode 22 = [initial-cycle charge capacity qa1 (mAh/g) of negative electrode active material × initial-cycle charge-discharge efficiency Ea1 of negative electrode 22 × ratio ra of negative electrode active material to negative electrode active material layer 22B × area density la ($mg/cm^2$) of negative electrode active material layer 22B] / 1000.

Second- or subsequent-cycle charge capacity QaN per unit area ($mAh/cm^2$) of negative electrode 22 = [initial-cycle discharge capacity Qa1' per unit area (mAh/g) of negative electrode 22 × charge-discharge efficiency EaN of negative electrode 22] / 1000.

Second- or subsequent-cycle discharge capacity QaN' per unit area ($mAh/cm^2$) of negative electrode 22 = [immediately-preceding-cycle charge capacity QaN per unit area of negative electrode 22 × charge-discharge efficiency EaN of negative electrode 22] / 1000.

In this case, because the electrochemical capacity per unit area of the negative electrode 22 is less than or equal to the electrochemical capacity per unit area of the positive electrode 21, the following two conditions are satisfied.

Initial-cycle charge capacity Qc1 per unit area ($mAh/cm^2$) of positive electrode 21 ≥ initial-cycle charge capacity Qa1 per unit area ($mAh/cm^2$) of negative electrode 22.

$$\text{Second- or subsequent-cycle charge capacity QcN per unit area (mAh/cm}^2\text{) of}$$

$$\text{positive electrode 21} \geq \text{second- or subsequent-cycle charge capacity QaN per unit}$$

$$\text{area (mAh/cm}^2\text{) of negative electrode 22.}$$

Accordingly, the amount of the negative electrode active material included in the negative electrode 22 and the amount of the positive electrode active material included in the positive electrode 21 are adjusted with respect to each other to make the electrochemical capacity per unit area of the negative electrode 22 less than or equal to the electrochemical capacity per unit area of the positive electrode 21.

Examples of the negative electrode material include a carbon material, a metal-based material, a titanium-containing compound, and a niobium-containing compound. Note that materials belonging to each of the titanium-containing compound and the niobium-containing compound are excluded from the metal-based material.

The term "carbon material" is a generic term for a material that includes carbon as a constituent element. A reason for this is that a high energy density is stably obtainable owing to the crystal structure of the carbon material which hardly varies upon insertion and extraction of lithium. Another reason is that improved electrical conductivity of the negative electrode active material layer 22B is achievable owing to the carbon material which also serves as the negative electrode conductor.

Specifically, examples of the carbon material include graphitizable carbon, non-graphitizable carbon, and graphite. Spacing of a (002) plane of the non-graphitizable carbon is, for example, greater than or equal to 0.37 nm, and spacing of a (002) plane of the graphite is, for example, less than or equal to 0.34 nm.

More specific examples of the carbon material include pyrolytic carbons, cokes, glassy carbon fibers, an organic polymer compound fired body, activated carbon, and carbon blacks. Examples of the cokes include pitch coke, needle coke, and petroleum coke. The organic polymer compound fired body is a resultant of firing or carbonizing a polymer compound such as a phenol resin or a furan resin at any temperature. Other than the above, the carbon material may be low-crystalline carbon heat-treated at a temperature of about 1000°C or lower, or may be amorphous carbon, for example. Examples of a shape of the carbon material include a fibrous shape, a spherical shape, a granular shape, and a scale-like shape.

The term "metal-based material" is a generic term for a material that includes any one or more of metal elements and metalloid elements as constituent elements. A reason for this is that a higher energy density is achievable.

The metal-based material may be a simple substance, an alloy, a compound, a mixture of two or more thereof, or a material including one or more phases thereof. Note that the term "alloy" encompasses not only a material that includes two or more metal elements but also a material that includes one or more metal elements and one or more metalloid elements. The alloy may further include one or more non-metallic elements. The metal-based material has a state such as a solid solution, a eutectic (a eutectic mixture), an intermetallic compound, or a state including two or more thereof that coexist.

The metal element and the metalloid element are each able to form an alloy with lithium. Specific examples of the metal element and the metalloid element include magnesium, boron, aluminum, gallium, indium, silicon, germanium, tin, lead, bismuth, cadmium, silver, zinc, hafnium, zirconium, yttrium, palladium, and platinum.

Among the above-described materials, silicon or tin is preferable, and silicon is more preferable. A reason for this is that a markedly high energy density is obtainable owing to superior lithium insertion capacity and superior lithium extraction capacity thereof.

The metal-based material may specifically be a simple substance of silicon, a silicon alloy, a silicon compound, a simple substance of tin, a tin alloy, a tin compound, a mixture of two or more thereof, or a material including one or more phases thereof. The simple substance described here merely refers to a simple substance in a general sense. The simple substance may therefore include a small amount of impurity, that is, does not necessarily have a purity of 100%.

The silicon alloy includes, as a constituent element or constituent elements other than silicon, for example, one or more of elements including, without limitation, tin, nickel, copper, iron, cobalt, manganese, zinc, indium, silver, titanium, germanium, bismuth, antimony, and chromium. The silicon compound includes, as a constituent element or constituent elements other than silicon, for example, one or more of elements including, without limitation, carbon and oxygen. The silicon compound may include, as a constituent element or constituent elements other than silicon, for example, one or more of the constituent elements described in relation to the silicon alloy.

Specifically, examples of the silicon alloy and the silicon compound include $SiB_4$, $SiB_6$, $Mg_2Si$, $Ni2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, $SiC$, $Si_3N_4$, $Si_2N_2O$, and $SiO_v$ (where $0 < v \leq 2$). Note, however, that the range of $v$ may be $0.2 < v < 1.4$, in one example.

The tin alloy includes, as a constituent element or constituent elements other than tin, for example, one or more of elements including, without limitation, silicon, nickel, copper, iron, cobalt, manganese, zinc, indium, silver, titanium, germanium, bismuth, antimony, and chromium. The tin compound includes, as a constituent element or constituent elements other than tin, for example, one or more of elements including, without limitation, carbon and oxygen. The tin compound may include, as a constituent element or constituent elements other than tin, for example, one or more of the constituent elements described in relation to the tin alloy.

Specifically, examples of the tin alloy and the tin compound include $SnO_w$ (where $0 < w \leq 2$), $SnSiO_3$, and $Mg_2Sn$.

The term "titanium-containing compound" is a generic term for a material that includes titanium as a constituent element. A reason for this is that the titanium-containing compound is electrochemically stable and thus has a low electrochemical reactivity as compared with a material such as a carbon material. Accordingly, a decomposition reaction of the electrolytic solution associated with the reactivity of the negative electrode 22 is suppressed. Specifically, examples of the titanium-containing compound include a titanium oxide, a lithium-titanium composite oxide, and a hydrogen-titanium compound.

The titanium oxide is, for example, a compound represented by Formula (11) below. More specifically, examples of the titanium oxide include a bronze-type titanium oxide.

$$TiO_w \ldots\ldots \quad (11)$$

where w satisfies $1.85 \leq w \leq 2.15$.

This titanium oxide is, for example, titanium oxide ($TiO_2$) of a type such as an anatase type, a rutile type, or a brookite type. Note that the titanium oxide may be a composite oxide that includes, as constituent elements, titanium and one or more of elements including, without limitation, phosphorus, vanadium, tin, copper, nickel, iron, and cobalt. Examples of this composite oxide include $TiO_2$-$P_2O_5$, $TiO_2$-$V_2O_5$, $TiO_2$-$P_2O_5$-$SnO_2$, and $TiO_2$-$P_2O_5$-MeO, where Me is, for example, one or more of elements including, without limitation, copper, nickel, iron, and cobalt. Note that a potential at which lithium is insertable into and extractable from the titanium oxide is, for example, from 1 V to 2 V, both inclusive (vs Li/Li$^+$).

The term "lithium-titanium composite oxide" is a generic term for a composite oxide that includes lithium and titanium as constituent elements. Specifically, examples of the lithium-titanium composite oxide include respective compounds represented by Formulas (12) to (14) below, and more specifically include a ramsdellite-type lithium titanate. In Formula (12), M12 represents metal elements that are to become divalent ions. In Formula (13), M13 represents metal elements that are to become trivalent ions. In Formula (14), M14 represents metal elements that are to become tetravalent ions.

$$Li[Li_xM12_{(1-3x)/2}Ti_{(3+x)/2}]O_4 \ldots\ldots \quad (12)$$

where:

M12 is at least one of magnesium (Mg), calcium (Ca), copper (Cu), zinc (Zn), or strontium (Sr); and
x satisfies $0 \leq x \leq 1/3$.

$$Li[Li_yM13_{1-3y}Ti_{1+2y}]O_4 \ldots\ldots \quad (13)$$

where:

M13 is at least one of aluminum (Al), scandium (Sc), chromium (Cr), manganese (Mn), iron (Fe), germanium (Ga), or yttrium (Y); and
y satisfies $0 \leq y \leq 1/3$.

$$Li[Li_{1/3}M14_zTi_{(5/3)-z}]O_4 \ldots\ldots \quad (14)$$

where:

M14 is at least one of vanadium (V), zirconium (Zr), or niobium (Nb); and
z satisfies $0 \leq z \leq 2/3$.

Although the lithium-titanium composite oxide is not limited to one having a particular crystal structure, it is preferable that the lithium-titanium composite oxide have a spinel crystal structure, in particular. A reason for this is that such a crystal structure is less changeable upon charging and discharging, thus serving to achieve a stable battery characteristic.

Specifically, examples of the lithium-titanium composite oxide represented by Formula (12) include $Li_{3.75}Ti_{4.875}Mg_{0.375}O_{12}$. Examples of the lithium-titanium composite oxide represented by Formula (13) include $LiCrTiO_4$. Examples of the lithium-titanium composite oxide represented by Formula (14) include $Li_4Ti_5O_{12}$ and $Li_4Ti_{4.95}Nb_{0.05}O_{12}$.

The term "hydrogen-titanium compound" is a generic term for an oxide that includes hydrogen and titanium as constituent elements. Specifically, examples of the hydrogen-titanium compound include $H_2Ti_3O_7(3TiO_2.1H_2O)$, $H_6Ti_{12}O_{27}(3TiO_2·0.75H_2O)$, $H_2Ti_6O_{13}(3TiO_2·0.5H_2O)$, $H_2Ti_7O_{15}(3TiO_2·0.43H_2O)$, and $H_2Ti_{12}O_{25}(3TiO_2·0.25H_2O)$.

The term "niobium-containing compound" is a generic term for a material that includes niobium as a constituent element. A reason for this is that the niobium-containing compound is electrochemically stable and thus suppresses a decomposition reaction of the electrolytic solution associated with the reactivity of the negative electrode 22, as with the titanium-containing compound described above. Specifically, examples of the niobium-containing compound include a lithium-niobium composite oxide, a hydrogen-niobium compound, and a titanium-niobium composite oxide. Note that materials belonging to the niobium-containing compound are excluded from the titanium-containing compound.

The term "lithium-niobium composite oxide" is a generic term for a composite oxide that includes lithium and niobium as constituent elements. Examples of the lithium-niobium composite oxide include $LiNbO_2$. The term "hydrogen-niobium compound" is a generic term for a composite oxide that includes hydrogen and titanium as constituent elements. Examples of the hydrogen-niobium compound include $H_4Nb_6O_{17}$. The term "titanium-niobium composite oxide" is a generic term for, for example, a composite oxide that includes titanium and niobium as constituent elements. Examples of the titanium-niobium composite oxide include $TiNb_2O_7$ and $Ti_2Nb_{10}O_{29}$. Note that the titanium-niobium composite oxide may intercalate lithium, for example. The amount of lithium to be intercalated into the titanium-niobium composite oxide is not particularly limited. For example, the amount of lithium to be intercalated into $TiNb_2O_7$ is up to four equivalents with respect to $TiNb_2O_7$.

Among others, the negative electrode material preferably includes one or more of the titanium oxide, the lithium-titanium composite oxide, the hydrogen-titanium compound, the lithium-niobium composite oxide, the hydrogen-niobium compound, and the titanium composite oxide. A reason for this is that the titanium oxide and the like have sufficient electrochemical stability, and thus sufficiently suppress a decomposition reaction of the electrolytic solution associated with the reactivity of the negative electrode 22.

Details of the negative electrode binder are similar to those of the positive electrode binder, for example. Details of the negative electrode conductor are similar to those of the positive electrode conductor, for example.

[Separator]

The separator 23 includes a porous film of a material such as a synthetic resin or ceramic, for example. The separator 23 may be a stacked film including two or more porous films that are stacked on each other. Examples of the synthetic resin include polyethylene.

In particular, the separator 23 may include the porous film described above and a polymer compound layer, for example. The porous film serves as a base layer. The polymer compound layer is provided on the base layer. The polymer compound layer may be provided on only one side of the base layer or on each of both sides of the base layer, for example. A reason for this is that the separator 23 thereby improves in adhesion to the positive electrode 21 and adhesion to the negative electrode 22, thus allowing the wound electrode body 20 to resist being distorted. This suppresses a decomposition reaction of the electrolytic solution and also suppresses leakage of the electrolytic solution with which the base layer is impregnated.

The polymer compound layer includes, for example, a polymer compound such as polyvinylidene difluoride. A reason for this is that such a polymer compound has superior physical strength and is electrochemically stable. For example, the polymer compound layer may include insulating particles such as inorganic particles. A reason for this is that safety improves. The inorganic particles are not limited to a particular kind, and may be particles of a material such as aluminum oxide or aluminum nitride, for example.

[Electrolytic Solution]

The wound electrode body 20 is impregnated with the electrolytic solution, as described above. Accordingly, the positive electrode 21, the negative electrode 22, and the separator 23 are each impregnated with the electrolytic solution, for example.

The electrolytic solution includes a solvent and an electrolyte salt. Only a single solvent may be used, or two or more solvents may be used. Similarly to this, only a single electrolyte salt may be used, or two or more electrolyte salts may be used.

(Solvent)

Examples of the solvent include one or more of solvents including, without limitation, a non-aqueous solvent (an organic solvent). An electrolytic solution including a non-aqueous solvent is a so-called non-aqueous electrolytic solution.

The non-aqueous solvent is not limited to a particular kind, and examples thereof include a cyclic carbonate ester, a chain carbonate ester, a lactone, a chain carboxylate ester, and a nitrile (mononitrile) compound. Examples of the cyclic carbonate ester include ethylene carbonate and propylene carbonate. Examples of the chain carbonate ester include dimethyl carbonate and diethyl carbonate. Examples of the lactone include γ-butyrolactone and γ-valerolactone. Examples of the chain carboxylate ester include methyl acetate, ethyl acetate, and methyl propionate. Examples of the nitrile compound include acetonitrile, methoxy acetonitrile, and 3-methoxy propionitrile.

Further examples of the non-aqueous solvent include an unsaturated cyclic carbonate ester, a halogenated carbonate ester, a sulfonate ester, an acid anhydride, a dicyano compound (a dinitrile compound), a diisocyanate compound, and a phosphate ester. Examples of the unsaturated cyclic carbonate ester include vinylene carbonate, vinyl ethylene carbonate, and methylene ethylene carbonate. Examples of the halogenated carbonate ester include 4-fluoro-1,3-dioxolane-2-one, 4,5-difluoro-1,3-dioxolane-2-one, and fluoromethyl methyl carbonate. Examples of the sulfonate ester include 1,3-propane sultone and 1,3-propene sultone. Examples of the acid anhydride include succinic anhydride, glutaric anhydride, maleic anhydride, ethane disulfonic anhydride, propane disulfonic anhydride, sulfobenzoic anhydride, sulfopropionic anhydride, and sulfobutyric anhydride. Examples of the dinitrile compound include succinonitrile, glutaronitrile, adiponitrile, and phthalonitrile. Examples of the diisocyanate compound include hexamethylene diisocyanate. Examples of the phosphate ester include trimethyl phosphate and triethyl phosphate.

(Electrolyte Salt)

Examples of the electrolyte salt include one or more of salts including, without limitation, a lithium salt. The lithium salt is not limited to a particular kind, and examples thereof include lithium hexafluorophosphate ($LiPF_6$), lithium tetrafluoroborate ($LiBF_4$), lithium bis(fluorosulfonyl)imide ($LiN(SO_2F)_2$), lithium bis(trifluoromethane sulfonyl)imide ($LiN(CF_3SO_2)_2$), lithium difluorophosphate ($LiPF_2O_2$), and lithium fluorophosphate ($Li_2PFO_3$). A content of the electrolyte salt is, for example, from 0.3 mol/kg to 3.0 mol/kg both inclusive with respect to the solvent, but is not particularly limited thereto.

<1-2. Operation>

For example, upon charging the secondary battery, lithium ions are extracted from the positive electrode 21, and the extracted lithium ions are inserted into the negative electrode 22 via the electrolytic solution. For example, upon discharging the secondary battery, lithium ions are extracted from the negative electrode 22, and the extracted lithium ions are inserted into the positive electrode 21 via the electrolytic solution.

<1-3. Manufacturing Method>

Here, a method of manufacturing the positive electrode active material will be described first and then a method of manufacturing the secondary battery will be described.

< 1-3-1. Method of Manufacturing Positive Electrode Active Material>

In a case of manufacturing the positive electrode active material, for example, a hydrothermal synthesis method or a solid-phase synthesis method is used in accordance with a procedure described below. However, another synthesis method may be used to synthesize the positive electrode active material.

[Hydrothermal Synthesis Method]

In a case of using a hydrothermal synthesis method, first, the raw materials of the lithium-manganese phosphate compound are prepared and thereafter the raw materials are mixed together to obtain a mixture. Details of the raw materials are as described above.

Thereafter, the mixture is put into water, following which the water is stirred to thereby prepare an aqueous solution. Conditions such as the water temperature may be freely set.

Thereafter, the aqueous solution is heated using a pressure vessel such as an autoclave to thereby cause the aqueous solution to react. The internal pressure of the pressure vessel may be freely set, and the temperature at the time of the heating may also be freely set. Crystals of the lithium-manganese phosphate compound are thereby grown under a high-temperature and high-pressure condition. Thereafter, using a spray dryer, the aqueous solution including the lithium-manganese phosphate compounds is sprayed and then the sprayed matter is dried to thereby obtain the positive electrode active material particles 1, i.e., the primary particles P1. Note that the positive electrode active material particles 1, i.e., the primary particles P1 may be obtained by pulverizing the crystals of the lithium-manganese phosphate compound with a pulverizer such as a ball mill. In this case, it is possible to adjust the particle diameters of the positive electrode active material particles 1 by using a pulverization process.

Lastly, the carbon source is added to the positive electrode active material particles 1, following which the carbon source is heated. Details of the carbon source are as described above. Although not particularly limited, the temperature at the time of the heating is 700°C or higher, for example. This causes the carbon source to be carbonized, i.e., to form a so-called carbon coat, on the surface of each of the positive electrode active material particles 1, thereby causing the surface of each of the positive electrode active material particles 1 to be covered with the carbon material 2. In this case, the positive electrode active material particles 1 (the lithium-manganese phosphate compound) each improve in crystallinity. As a result, the positive electrode active material particles 1 covered with the carbon material 2 adhere to each other, thereby forming the secondary particles P2 as illustrated in FIG. 3.

Note that, in the case of using the hydrothermal synthesis method, the carbon source may be added to the above-described mixture instead of adding the carbon source to the positive electrode active material particles 1, and thereafter, a similar procedure may be performed to cause each of the positive electrode active material particles 1 to be covered with the carbon material 2 when the positive electrode active material particles 1 are synthesized. In this case also, the secondary particles P2 illustrated in FIG. 3 are obtained.

[Solid-phase Synthesis Method]

In a case of using a solid-phase synthesis method, the carbon source is added to the above-described mixture, following which the mixture is heated. Respective details of the mixture and the carbon source are as described above. Although not particularly limited, the heating temperature is 500°C or higher, for example. Particles of the lithium-manganese phosphate compound are thereby dry-synthesized. The positive electrode active material particles 1, i.e., the primary particles P1, are thus formed and the carbon source is carbonized on the surface of each of the positive electrode active material particles 1, thereby causing the surface of each of the positive electrode active material particles 1 to be covered with the carbon material 2. In this case, it is possible to adjust the particle diameters of the positive electrode active material particles 1 by varying the amount of addition of the carbon source. As a result, the positive electrode active material particles 1 covered with the carbon material 2 adhere to each other, thereby forming the secondary particles P2 as illustrated in FIG. 3.

<1-3-2. Method of Manufacturing Secondary Battery>

In a case of manufacturing the secondar battery, the positive electrode 21 is fabricated, the negative electrode 22 is fabricated, the electrolytic solution is prepared, and thereafter the secondary battery is assembled by the following procedures, for example.

[Fabrication of Positive Electrode]

First, the positive electrode active material including the positive electrode active material particles 1 is mixed with materials including, without limitation, the positive electrode binder and the positive electrode conductor on an as-needed basis to thereby obtain a positive electrode mixture. Thereafter, the positive electrode mixture is dispersed or dissolved in a solvent such as an organic solvent to thereby prepare a positive electrode mixture slurry in a paste form. Lastly, the positive electrode mixture slurry is applied on both sides of the positive electrode current collector 21A, following which the applied positive electrode mixture slurry is dried to thereby form the positive electrode active material layers 21B. Thereafter, the positive electrode active material layers 21B may be compression-molded by means of a machine such as a roll pressing machine. In this case, the positive electrode active material layers 21B may be heated. The positive electrode active material layers 21B may be compression-molded a plurality of times.

[Fabrication of Negative Electrode]

The negative electrode active material layers 22B are formed on both sides of the negative electrode current collector 22A by a procedure similar to that in the fabrication procedure of the positive electrode 21 described above. Specifically, the negative electrode active material is mixed with materials including, without limitation, the negative positive electrode binder and the negative electrode conductor on an as-needed basis to thereby obtain a negative electrode mixture. Thereafter, the negative electrode mixture is dispersed or dissolved in a solvent such as an organic solvent to thereby prepare a negative electrode mixture slurry in a paste form. Thereafter, the negative electrode mixture slurry is applied on both sides of the negative electrode current collector 22A, following which the applied negative electrode mixture slurry is dried to thereby form the negative electrode active material layers 22B. Thereafter, the negative electrode active material layers 22B may be compression-molded.

In the case of fabricating each of the positive electrode 21 and the negative electrode 22, as described above, the amount of the negative electrode active material and the amount of the positive electrode active material are adjusted with respect to each other to make the electrochemical capacity per unit area of the negative electrode less than or equal to the electrochemical capacity per unit area of the positive electrode 21.

[Preparation of Electrolytic Solution]

The electrolyte salt is added to the solvent, following which the solvent is stirred. In this case, one or more of the above-described materials such as the unsaturated cyclic carbonate ester may be added as additives to the solvent on an as-needed basis.

[Assembly of Secondary Battery]

First, the positive electrode lead 25 is coupled to the positive electrode current collector 21A by a method such as a welding method, and the negative electrode lead 26 is coupled to the negative electrode current collector 22A by a method such as a welding method. Thereafter, the positive electrode 21 and the negative electrode 22 are stacked on each other with the separator 23 interposed therebetween, following which the stack of the positive electrode 21, the negative electrode 22, and the separator 23 is wound to thereby form a wound body. Thereafter, the center pin 24 is disposed in the space 20C provided at the winding center of the wound body.

Thereafter, the wound body is interposed between the pair of insulating plates 12 and 13, and the wound body in that state is contained in the battery can 11 together with the insulating plates 12 and 13. In this case, the positive electrode lead 25 is coupled to the safety valve mechanism 15 by a method such as a welding method, and the negative electrode lead 26 is coupled to the battery can 11 by a method such as a welding method. Thereafter, the electrolytic solution is injected into the battery can 11 to thereby impregnate the wound body with the electrolytic solution. This causes each of the positive electrode 21, the negative electrode 22, and the separator 23 to be impregnated with the electrolytic solution. As a result, the wound electrode body 20 is formed.

Lastly, the open end of the battery can 11 is crimped by means of the gasket 17 to thereby attach the battery cover 14, the safety valve mechanism 15, and the positive temperature coefficient device 16 to the open end of the battery can 11. Thus, the wound electrode body 20 is sealed in the battery can 11. As a result, the secondary battery is completed.

<1-4. Action and Effects>

According to the secondary battery of the cylindrical type, the positive electrode active material particles 1 (the primary particles P1) included in the positive electrode 21 include the lithium-manganese phosphate compound, and the average particle diameter of the positive electrode active material particles 1 is less than or equal to 100 nm. Further, the electrochemical capacity per unit area of the negative electrode 22 is less than or equal to the electrochemical capacity per unit area of the positive electrode 21.

In this case, as described above, the positive electrode active material particles 1 each suffer less stress upon insertion and extraction of lithium, and irreversible degradation thereof is suppressed. Moreover, the electrical resistance of each of the positive electrode active material particles 1 is reduced. Accordingly, even in the case of using the positive electrode active material particles 1 including the lithium-manganese phosphate compound, the discharge voltage does not drop easily, with the electrical resistance being reduced. This makes it possible to achieve superior battery characteristics.

In particular, y in Formula (1) may satisfy $y \geq 0.5$. This suppresses a drop in the discharge voltage effectively in the case of using the positive electrode active material particles 1 including the lithium-manganese phosphate compound. Accordingly, it is possible to achieve higher effects.

Further, the average particle diameter of the positive electrode active material particles 1 may be less than or equal to 60 nm. This further suppresses a drop in the discharge voltage, making it possible to achieve higher effects.

Further, the surface of each of the positive electrode active material particles 1 may be covered with the carbon material 2. This makes it easier for the secondary particles P2 to be formed by the positive electrode active material particles 1 in a state of being separated from each other by the carbon material 2 therebetween. In addition, this results in a reduction of the electrical resistance of the negative electrode 22 by virtue of the electrical conductivity of the carbon material 2. Accordingly, it is possible to achieve higher effects. In this case, the content of the carbon material 2 in the secondary particles P2 may be from 1.4 wt% to 4.8 wt% both inclusive. This makes it further easier for the secondary particles P2 to be formed by the positive electrode active material particles 1, while suppressing inhibition of the insertion and the extraction of lithium. Accordingly, it is possible to achieve even higher effects.

Further, the negative electrode 22 may include a titanium oxide or the like as the negative electrode active material. This results in suppression of a decomposition reaction of the electrolytic solution associated with the reactivity of the negative electrode 22, by virtue of the property of the titanium oxide or the like which is electrochemically stable. Accordingly, it is possible to achieve higher effects.

<2. Secondary Battery (Laminated-film Type)>

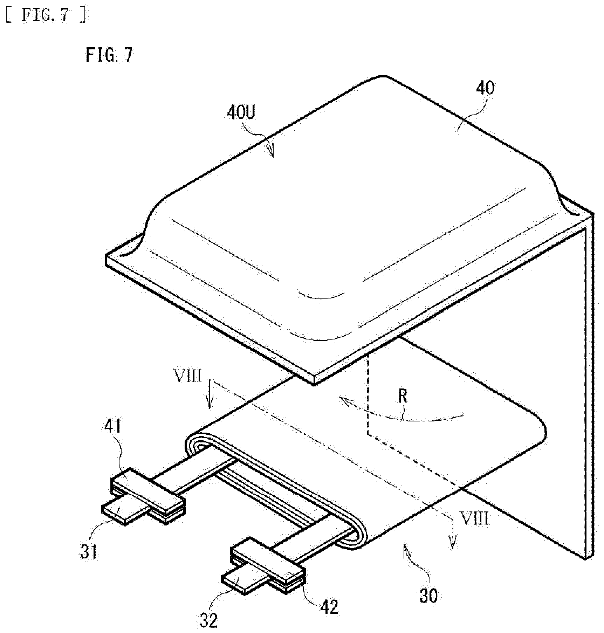

FIG. 7 is a perspective view of a configuration of another secondary battery. FIG. 8 enlarges a cross-sectional configuration of a main part, that is, a wound electrode body 30, of the secondary battery taken along a line VIII-VIII illustrated in FIG. 7. Note that FIG. 7 illustrates a state in which the wound electrode body 30 and an outer package member 40 are separated away from each other.

In the following description, where appropriate, reference will be made to the components of the secondary battery of the cylindrical type (see FIGs. 1 and 2) described already.

<2-1. Configuration>

As illustrated in FIG. 7, this secondary battery is of a laminated-film type, for example. The secondary battery of the laminated-film type includes, for example, the outer package member 40 in a film form, and a battery device (the wound electrode body 30) contained in the outer package member 40. The outer package member 40 has softness or flexibility.

The wound electrode body 30 is a structure in which, for example, a positive electrode 33 and a negative electrode 34 are stacked on each other with a separator 35 and an electrolyte layer 36 interposed therebetween, and also in which the stack of the positive electrode 33, the negative electrode 34, the separator 35, and the electrolyte layer 36 is wound. The wound electrode body 30 has a surface protected, for example, with a protective tape 37. The electrolyte layer 36 is interposed, for example, between the positive electrode 33 and the separator 35, and also between the negative electrode 34 and the separator 35.

A positive electrode lead 31 is coupled to the positive electrode 33. The positive electrode lead 31 is led out from inside to outside the outer package member 40. The positive electrode lead 31 includes a material similar to the material that the positive electrode lead 25 includes, for example. The positive electrode lead 31 has a shape such as a thin plate shape or a meshed shape, for example.

A negative electrode lead 32 is coupled to the negative electrode 34. The negative electrode lead 32 is led out from inside to outside the outer package member 40. A lead-out direction of the negative electrode lead 32 is, for example, similar to a lead-out direction of the positive electrode lead 31. The negative electrode lead 32 includes a material similar to the material that the negative electrode lead 26 includes, for example. The negative electrode lead 32 has a shape similar to the shape of the positive electrode lead 31, for example.

[Outer Package Member]

The outer package member 40 is, for example, a single film that is foldable in a direction of an arrow R illustrated in FIG. 7. The outer package member 40 has a depression 40U, for example. The depression 40U is adapted to contain the wound electrode body 30.

The outer package member 40 is a laminated body or a laminated film including, for example, a fusion-bonding layer, a metal layer, and a surface protective layer that are laminated in this order from an inner side toward an outer side. In a process of manufacturing the secondary battery, for example, the outer package member 40 is folded in such a manner that portions of the fusion-bonding layer oppose each other with the wound electrode body 30 interposed therebetween. Thereafter, outer edges of the fusion-bonding layer are fusion-bonded to each other. The fusion-bonding layer is, for example, a film that includes a polymer compound such as polypropylene. The metal layer is, for example, a metal foil that includes a metal material such as aluminum. The surface protective layer is, for example, a film that includes a polymer compound such as nylon. The outer package member 40 may include two laminated films, for example. The two laminated films may be adhered to each other by means of an adhesive.

A sealing film 41, for example, is provided between the outer package member 40 and the positive electrode lead 31. The sealing film 41 is adapted to prevent entry of outside air. The sealing film 41 includes a material having adherence to the positive electrode lead 31. Examples of such a material include a polyolefin resin such as polypropylene.

A sealing film 42, for example, is provided between the outer package member 40 and the negative electrode lead 32. The sealing film 42 has a function similar to that of the sealing film 41. The sealing film 42 includes a material that is similar to the material included in the sealing film 41 except that the material is adherable to the negative electrode lead 32 instead of the positive electrode lead 31.

[Positive Electrode, Negative Electrode, and Separator]

The positive electrode 33 includes, for example, a positive electrode current collector 33A and a positive electrode active material layer 33B. The negative electrode 34 includes, for example, a negative electrode current collector 34A and a negative electrode active material layer 34B. Configurations of the positive electrode current collector 33A, the positive electrode active material layer 33B, the negative electrode current collector 34A, and the negative electrode active material layer 34B are respectively similar to those of the positive electrode current collector 21A, the positive electrode active material layer 21B, the negative electrode current collector 22A, and the negative electrode active material layer 22B, for example. A configuration of the separator 35 is similar to that of the separator 23, for example.

That is, the positive electrode active material particles 1 (the primary particles P1) included in the positive electrode 33 include the lithium-manganese phosphate compound, and the average particle diameter of the positive electrode active material particles 1 is less than or equal to 100 nm. Further, an electrochemical capacity per unit area of the negative electrode 34 is less than or equal to an electrochemical capacity per unit area of the positive electrode 33.

[Electrolyte Layer]

The electrolyte layer 36 includes an electrolytic solution and a polymer compound. The electrolyte layer 36 described here is a so-called gel electrolyte. The electrolytic solution is thus held by the polymer compound in the electrolyte layer 36. A reason for this is that a high ionic conductivity is obtainable and leakage of the electrolytic solution is prevented. The high ionic conductivity is 1 mS/cm or higher at room temperature, for example. The electrolyte layer 36 may further include other materials including, without limitation, various additives.

The configuration of the electrolytic solution is as described above. The polymer compound includes, for example, a homopolymer, a copolymer, or both. Examples of the homopolymer include polyvinylidene difluoride. Examples of the copolymer include a copolymer of vinylidene fluoride and hexafluoropropylene.

Regarding the electrolyte layer 36 which is a gel electrolyte, the concept of the solvent included in the electrolytic solution is broad and encompasses not only a liquid material but also an ion-conductive material that is able to dissociate the electrolyte salt. Accordingly, in a case of using an ion-conductive polymer compound, the polymer compound is also encompassed by the solvent.

<2-2. Operation>

For example, upon charging the secondary battery, lithium ions are extracted from the positive electrode 33, and the extracted lithium ions are inserted into the negative electrode 34 via the electrolyte layer 36. For example, upon discharging the secondary battery, lithium ions are extracted from the negative electrode 34, and the extracted lithium ions are inserted into the positive electrode 33 via the electrolyte layer 36.

<2-3. Manufacturing Method>

The secondary battery including the electrolyte layer 36 is manufactured by any of the following three kinds of procedures, for example.

[First Procedure]

First, by a procedure similar to the fabrication procedure of the positive electrode 21, the positive electrode active material layers 33B are formed on both sides of the positive electrode current collector 33A to thereby fabricate the positive electrode 33. Further, by a procedure similar to the fabrication procedure of the negative electrode 22, the negative electrode active material layers 34B are formed on both sides of the negative electrode current collector 34A to thereby fabricate the negative electrode 34.

Thereafter, the electrolytic solution is prepared, following which the electrolytic solution is mixed with the polymer compound and a material such as an organic solvent to thereby prepare a precursor solution. Thereafter, the precursor solution is applied on the positive electrode 33, following which the applied precursor solution is dried to thereby form the electrolyte layer 36. The precursor solution is also applied on the negative electrode 34, following which the applied precursor solution is dried to thereby form the electrolyte layer 36. Thereafter, the positive electrode lead 31 is coupled to the positive electrode current collector 33A by a method such as a welding method, and the negative electrode lead 32 is coupled to the negative electrode current collector 34A by a method such as a welding method. Thereafter, the positive electrode 33 and the negative electrode 34 are stacked on each other with the separator 35 and the electrolyte layer 36 interposed therebetween, following which the stack of the positive electrode 33, the negative electrode 34, the separator 35, and the electrolyte layer 36 is wound to thereby form the wound electrode body 30. Thereafter, the protective tape 37 is attached to the surface of the wound electrode body 30.

Lastly, the outer package member 40 is folded in such a manner as to sandwich the wound electrode body 30, following which the outer edges of the outer package member 40 are bonded to each other by a method such as a thermal fusion bonding method. In this case, the sealing film 41 is interposed between the outer package member 40 and the positive electrode lead 31, and the sealing film 42 is interposed between the outer package member 40 and the negative electrode lead 32. Thus, the wound electrode body 30 is sealed in the outer package member 40. As a result, the secondary battery is completed.

[Second Procedure]

First, the positive electrode 33 and the negative electrode 34 are fabricated, following which the positive electrode lead 31 is coupled to the positive electrode 33, and the negative electrode lead 32 is coupled to the negative electrode 34. Thereafter, the positive electrode 33 and the negative electrode 34 are stacked on each other with the separator 35 interposed therebetween, following which the stack of the positive electrode 33, the negative electrode 34, and the separator 35 is wound to thereby form a wound body. Thereafter, the protective tape 37 is attached to a surface of the wound body. Thereafter, the outer package member 40 is folded in such a manner as to sandwich the wound body, following which the outer edges of the outer package member 40 excluding the outer edge at one side of the outer package member 40 are bonded to each other by a method such as a thermal fusion bonding method. The wound body is thereby contained in the pouch-shaped outer package member 40.

Thereafter, the electrolytic solution, monomers, and a polymerization initiator are mixed, following which the mixture is stirred to thereby prepare a composition for electrolyte. The monomers are raw materials of the polymer compound. Another material such as a polymerization inhibitor is mixed on an as-needed basis in addition to the electrolytic solution, the monomers, and the polymerization initiator. Thereafter, the composition for electrolyte is injected into the pouch-shaped outer package member 40, following which the outer package member 40 is sealed by a method such as a thermal fusion bonding method. Lastly, the monomers are thermally polymerized to thereby form the polymer compound. This allows the electrolytic solution to be held by the polymer compound, thereby forming the electrolyte layer 36. Thus, the wound electrode body 30 is sealed in the outer package member 40. As a result, the secondary battery is completed.

[Third Procedure]

First, a wound body is fabricated and the wound body is contained in the pouch-shaped outer package member 40 thereafter by a procedure similar to the second procedure, except for using the separator 35 that includes polymer compound layers provided on both sides of the base layer. Thereafter, the electrolytic solution is injected into the outer package member 40, following which the outer package member 40 is sealed by a method such as a thermal fusion bonding method. Lastly, the outer package member 40 is heated with a weight being applied to the outer package member 40 to thereby cause the separator 35 to be closely attached to each of the positive electrode 33 and the negative electrode 34 with the polymer compound layer therebetween. The polymer compound layer is thereby impregnated with the electrolytic solution, and the polymer compound layer is gelated, forming the electrolyte layer 36. Thus, the wound electrode body 30 is sealed in the outer package member 40. As a result, the secondary battery is completed.

The third procedure helps to reduce swelling of the secondary battery, in contrast to the first procedure. The third procedure also helps to prevent the solvent and the monomers, which are the raw materials of the polymer compound, from remaining in the electrolyte layer 36, in contrast to the second procedure. Accordingly, the electrolyte layer 36 is attached sufficiently closely to each of the positive electrode 33, the negative electrode 34, and the separator 35.

<2-4. Action and Effects>

According to the secondary battery of the laminated-film type, the positive electrode active material particles 1 (the primary particles P1) included in the positive electrode 33 include the lithium-manganese phosphate compound, and the average particle diameter of the positive electrode active material particles 1 is less than or equal to 100 nm. Further, the electrochemical capacity per unit area of the negative electrode 34 is less than or equal to the electrochemical capacity per unit area of the positive electrode 33. Thus, for a reason similar to that described in relation to the secondary battery of the cylindrical type, it is possible to achieve superior battery characteristics. Other action and effects related to the secondary battery of the laminated-film type are similar to those of the secondary battery of the cylindrical type.

<3. Modifications>

The secondary battery of the laminated-film type may include an electrolytic solution instead of the electrolyte layer 36. In such a case, the wound electrode body 30 is impregnated with the electrolytic solution, and therefore the positive electrode 33, the negative electrode 34, and the separator 35 are each impregnated with the electrolytic solution. After the wound body is contained in the pouch-shaped outer package member 40, the electrolytic solution is injected into the pouch-shaped outer package member 40. This causes the wound body to be impregnated with the electrolytic solution, thereby forming the wound electrode body 30. In this case also, it is possible to obtain similar effects.

<4. Applications of Secondary Battery>

Applications of the secondary battery are, for example, as follows.

The applications of the secondary battery are not particularly limited as long as they are, for example, machines, apparatuses, instruments, devices, or systems (assembly of a plurality of apparatuses, for example) in which the secondary battery is usable as a driving power source, an electric power storage source for electric power accumulation, or any other source. The secondary battery used as a power source may serve as a main power source or an auxiliary power source. The main power source is preferentially used regardless of the presence of any other power source. The auxiliary power source may be, for example, used in place of the main power source, or may be switched from the main power source on an as-needed basis. In a case where the secondary battery is used as the auxiliary power source, the kind of the main power source is not limited to the secondary battery.

Examples of the applications of the secondary battery include: electronic apparatuses including portable electronic apparatuses; portable life appliances; storage devices; electric power tools; battery packs mountable on laptop personal computers or other apparatuses as a detachable power source; medical electronic apparatuses; electric vehicles; and electric power storage systems. Examples of the electronic apparatuses include video cameras, digital still cameras, mobile phones, laptop personal computers, cordless phones, headphone stereos, portable radios, portable televisions, and portable information terminals. Examples of the portable life appliances include electric shavers. Examples of the storage devices include backup power sources and memory cards. Examples of the electric power tools include electric drills and electric saws. Examples of the medical electronic apparatuses include pacemakers and hearing aids. Examples of the electric vehicles include electric automobiles including hybrid automobiles. Examples of the electric power storage systems include home battery systems for accumulation of electric power for emergency. Needless to say, the secondary battery may have applications other than those described above.

Examples

A description is given of Examples of the technology below.

<Experiment Examples 1 to 8>

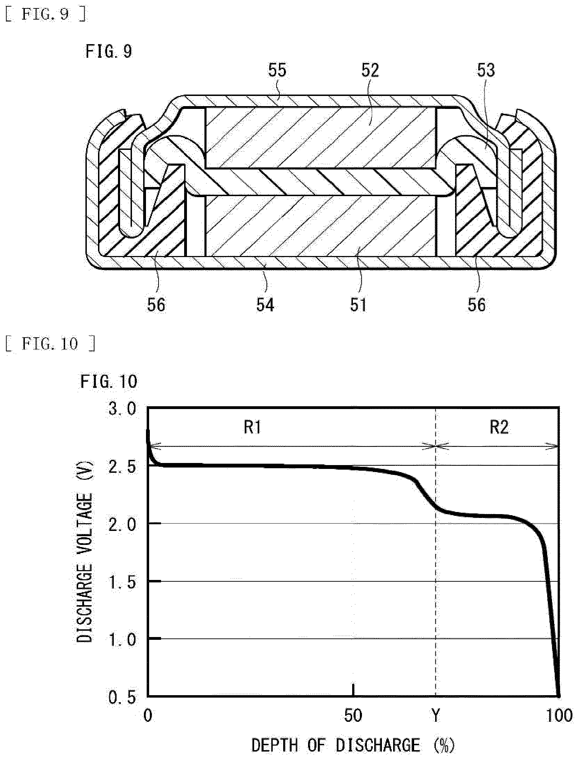

As described below, the positive electrode active material was synthesized and a test secondary battery (a coin type) illustrated in FIG. 9 was fabricated to evaluate the battery characteristics of the secondary battery. Here, aggregates of the positive electrode active material particles 1 (the primary particles P1) illustrated in FIG. 3, i.e., the secondary particles P2, were synthesized as the positive electrode active material.

The secondary battery of the coin type is a lithium-ion secondary battery in which, as illustrated in FIG. 9, a test electrode 51 and a counter electrode 52 are stacked on each other with a separator 53 interposed therebetween, and an outer package can 54 housing the test electrode 51 and an outer package cup 55 housing the counter electrode 52 are crimped to each other by means of a gasket 56.

[Synthesis of Positive Electrode Active Material]

A hydrothermal synthesis method was used to synthesize the positive electrode active material. In this case, first, a lithium-containing compound (lithium hydroxide (LiOH)), a manganese-containing compound (manganese sulfate monohydrate ($MnSO_4 \cdot H_2O$)), an iron-containing compound (iron sulfate heptahydrate ($FeSO_4 \cdot 7H_2O$)), a magnesium-containing compound (magnesium sulfate heptahydrate ($MgSO_4 \cdot 7H_2O$)), and a phosphate compound (phosphoric acid ($H_3PO_4$)) were prepared as the raw materials. Thereafter, the above-described series of raw materials were mixed to obtain a mixture. In this case, the series of raw materials were mixed so that a molar ratio between the series of elements, i.e., Li, P, Mn, Fe, and Mg, was 3:1:0.7:0.27:0.03.

Thereafter, the mixture was added to ion-exchanged water to obtain a suspension. Thereafter, the suspension was put into an autoclave, following which the suspension was heated at a heating temperature of 190°C for a heating time of 12 hours. Thereafter, the heat-treated suspension was taken out of the autoclave, following which the suspension was washed with ion-exchanged water and acetone. Thereafter, the suspension was subjected to a centrifugation process using a centrifuge to thereby collect solid matter ($LiMn_{0.70}Fe_{0.27}Mg_{0.03}PO_4$, which is a lithium-manganese phosphate compound), following which the solid matter was dried. Thereafter, the solid matter was subjected to a pulverization process using a ball mill to thereby obtain the positive electrode active material particles 1, i.e., the primary particles P1. Thereafter, the positive electrode active material particles 1 and a carbon source (an aqueous solution of sucrose) were mixed to thereby obtain a mixture solution. Thereafter, using a spray dryer, the mixture solution was sprayed and then the sprayed matter was dried.

Lastly, the sprayed matter was heated in a nitrogen atmosphere at a heating temperature of 700°C for a heating time of three hours. The surface of each of the positive electrode active material particles 1 was thereby covered with the carbon material 2. As a result, the secondary particles P2, each being an aggregate of two or more of the positive electrode active material particles 1, were obtained as illustrated in FIG. 3.

The amount of addition (wt%) of the carbon source and the content (wt%) of the carbon material 2 in the secondary particles P2 were as given in Table 1. The positive electrode active material particles 1 (the primary particles P1) were adjusted to average particle diameters (nm) as given in Table 1 by varying conditions such as the ball size in the pulverization process using the ball mill or duration of the pulverization process.

[Fabrication of Secondary Battery]

In a case of fabricating the test electrode 51, first, 90.5 parts by mass of the positive electrode active material (the secondary particles P2 described above), 5.0 parts by mass of the positive electrode binder (polyvinylidene difluoride), and 4.5 parts by mass of the positive electrode conductor (graphite) were mixed to thereby obtain a positive electrode mixture. Thereafter, the positive electrode mixture was put into an organic solvent (N-methyl-2-pyrrolidone), following which the organic solvent was stirred to thereby prepare a positive electrode mixture slurry in a paste form. Thereafter, the positive electrode mixture slurry was applied on both sides of the positive electrode current collector (a band-shaped aluminum foil having a thickness of 12 μm) by means of a coating apparatus, following which the applied positive electrode mixture slurry was dried to thereby form the positive electrode active material layers. Lastly, the positive electrode active material layers were compression-molded by means of a roll pressing machine.

In a case of fabricating the counter electrode 52, first, 90.5 parts by mass of the negative electrode active material ($Li_4Ti_5O_{12}$, which is a lithium-titanium composite oxide), 5.0 parts by mass of the negative electrode binder (polyvinylidene difluoride), and 4.5 parts by mass of the negative electrode conductor (graphite) were mixed to thereby obtain a negative electrode mixture. Thereafter, the negative electrode mixture was put into an organic solvent (N-methyl-2-pyrrolidone), following which the organic solvent was stirred to thereby prepare a negative electrode mixture slurry in a paste form. Thereafter, the negative electrode mixture slurry was applied on both sides of the negative electrode current collector (a band-shaped copper foil having a thickness of 15 μm) by means of a coating apparatus, following which the applied negative electrode mixture slurry was dried to thereby form the negative electrode active material layers. Lastly, the negative electrode active material layers were compression-molded by means of a roll pressing machine.

In the case of fabricating each of the test electrode 51 and the counter electrode 52, the amount of the positive electrode active material and the amount of the negative electrode active material were adjusted with respect to each other to set the magnitude relation between the electrochemical capacity per unit area of the test electrode 51 (the positive electrode) and the electrochemical capacity per unit area of the counter electrode 52 (the negative electrode), and to set the end-of-charge electrode, as given in Table 1. The "Electrochemical capacity" column in Table 1 gives the magnitude relation described above.

In a case of preparing the electrolytic solution, the electrolyte salt (lithium hexafluorophosphate) was added to the solvent (propylene carbonate and dimethyl carbonate), following which the solvent was stirred. In this case, a mixture ratio (a volume ratio) between propylene carbonate and dimethyl carbonate in the solvent was set to 40:60, and the content of the electrolyte salt with respect to the solvent was set to 1 mol/l (= 1 mol/dm$^3$).

In a case of assembling the secondary battery, the test electrode 51 was punched into a pellet shape, following which the test electrode 51 was housed inside the outer package can 54. Thereafter, the counter electrode 52 was punched into a pellet shape, following which the counter electrode 52 was housed inside the outer package cup 55. Thereafter, the test electrode 51 housed inside the outer package can 54 and the counter electrode 52 housed inside the outer package cup 55 were stacked on each other with the separator 53 (a porous polyolefin film having a thickness of 23 μm) interposed therebetween. Thereafter, the outer package can 54 and the outer package cup 55 were crimped to each other by means of the gasket 56. As a result, the lithium-ion secondary battery of the coin type was completed.

[Evaluation of Battery Characteristics]

Examination of battery characteristics of the secondary batteries revealed the results given in Table 1. Here, a cyclability characteristic and a discharge voltage characteristic were examined as the battery characteristics.

(Cyclability Characteristic)

In a case of examining the cyclability characteristic, first, the secondary battery was charged and discharged for one cycle in an ambient temperature environment (at a temperature of 23°C) in order to stabilize a state of the secondary battery. Thereafter, the secondary battery was charged and discharged for another cycle in the same environment, and a second-cycle discharge capacity was measured. Thereafter, the secondary battery was charged and discharged for 50 cycles in the same environment, and a 52nd-cycle discharge capacity was measured. Lastly, a capacity retention rate (%) was calculated as follows: capacity retention rate (%) = (52nd-cycle discharge capacity / second-cycle discharge capacity) $\times$ 100.

Upon the charging, the secondary battery was charged with a constant current of 1 C until a voltage reached 3.0 V, and was thereafter charged with a constant voltage of 3.0 V until a current reached 0.05 C. Upon the discharging, the secondary battery was discharged with a constant current of 1 C until the voltage reached 0.5 V. Note that 1 C and 0.05 C are current values that cause a battery capacity (a theoretical capacity) to be completely discharged in 1 hour and 20 hours, respectively.

(Discharge Voltage Characteristic)

In a case of examining the discharge voltage characteristic, as described below, four kinds of average discharge voltages (V) and two kinds of average discharge voltage retention rates (V) were calculated. Note that the values of the four kinds of average discharge voltages and the two kinds of average discharge voltage retention rates were rounded off to one decimal place. (Calculation of First Kind of Average Discharge Voltage and Second Kind of Average Discharge Voltage)

After the state of the secondary battery was stabilized by the procedure described above, first, the secondary battery was charged and discharged for another cycle in the same environment, and a discharge voltage (V) was measured at every 10% increase of a depth of discharge (%) at the time of the discharging at the second cycle. This is discharge step 1. Charging and discharging conditions were similar to those in the case of examining the cyclability characteristic, except that the current at the time of the charging and the current at the time of the discharging were each changed to 0.05 C.

Thereafter, the secondary battery was charged and discharged for 50 cycles in the same environment. Charging and discharging conditions were similar to those in the case of examining the cyclability characteristic.

Thereafter, the secondary battery was charged and discharged for another cycle in the same environment, and the discharge voltage (V) was measured at every 10% increase of the depth of discharge (%) at the time of the discharging at the 53rd cycle. This is discharge step 2. Charging and discharging conditions were similar to those in the case of examining the cyclability characteristic, except that the current at the time of the charging and the current at the time of the discharging were each changed to 0.05 C.

Lastly, by a procedure described below, the two kinds of average discharge voltages (V) were calculated on the basis of the respective measurement results of the discharge voltages in the discharge steps 1 and 2 described above.

FIG. 10 illustrates a discharge curve of the secondary battery. The horizontal axis represents the depth of discharge (%), and the vertical axis represents the discharge voltage (V). Note that FIG. 10 illustrates the discharge curve for Experiment example 2 (discharge step 1; current at the time of the discharging: 0.05 C) as a representative of Experiment examples 1 to 8.

If the discharge voltages are measured while discharging the secondary battery in the case where the positive electrode active material particles 1 each include the lithium-manganese phosphate compound ($LiMn_{0.70}Fe_{0.27}Mg_{0.03}PO_4$), the discharge region R1 associated with a reduction reaction of manganese ($Mn^{3+} \rightarrow Mn^{2+}$) and a discharge region R2 associated with a reduction reaction of iron ($Fe^{3+} \rightarrow Fe^{2+}$) are observed as illustrated in FIG. 10. In this case, upon repeated charges and discharges, the discharge voltage drops easily in the discharge region R1 associated with the reduction reaction of manganese. A reason for this is that the discharge region R1 is not only a region where the discharge voltage inherently tends to drop, but also a region where electrical resistance is high.

Here, a value Y (%) of the depth of discharge corresponding to the border between the discharge regions R1 and R2 corresponds to the manganese content of the lithium-manganese phosphate compound, that is, the value of y in Formula (1). More specifically, the value of y is the value of y multiplied by 100. Here, the value of y in the lithium-manganese phosphate compound ($LiMn_{0.70}Fe_{0.27}Mg_{0.03}PO_4$) is 0.7, and therefore the value of Y is approximately 70% (= 0.7 $\times$ 100).

In a case of calculating the first kind of average discharge voltage (V), an average value of six discharge voltage measurements obtained in the discharge region R1 (depth of discharge = 10% to 60%), out of the ten discharge voltage measurements each obtained at a 10% increase of the depth of discharge (%) in the discharge step 1 (current at the time of the discharging = 0.05 C), was calculated. The "Pre-cycle (0.05 C)" column under "Average discharge voltage" in Table 1 gives the first kind of average discharge voltage. Here, a reason for using the six discharge voltage measurements was to adopt discharge voltage measurements obtained in the region to the left of Y (= 70%), out of the ten discharge voltage measurements described above.

In a case of calculating the second kind of average discharge voltage (V), an average value of the six discharge voltage measurements obtained in the discharge region R1 (depth of discharge = 10% to 60%), out of the ten discharge voltage measurements each obtained at a 10% increase of the depth of discharge (%) in the discharge step 2 (current at the time of the discharging = 0.05 C), was calculated. The "Post-cycle (0.05 C)" column under "Average discharge voltage" in Table 1 gives the second kind of average discharge voltage. (Calculation of Third Kind of Average Discharge Voltage and Fourth Kind of Average Discharge Voltage)

After the state of the secondary battery was stabilized by the procedure described above, first, the discharge voltage (V) was measured at every 10% increase of the depth of discharge (%) by a procedure similar to that in the discharge step 1, except that the current at the time of the charging and the current at the time of the discharging were each changed to 1 C. This is discharge step 3. Thereafter, the secondary battery was charged and discharged for 50 cycles by the procedure described above. Thereafter, the discharge voltage (V) was measured at every 10% increase of the depth of discharge (%) by a procedure similar to that in the discharge step 2, except that the current at the time of the charging and the current at the time of the discharging were each changed to 1 C. This is discharge step 4. Lastly, as described below, the two kinds of average discharge voltages (V) were calculated on the basis of the respective measurement results of the discharge voltages in the discharge steps 3 and 4 described above.

In a case of calculating the third kind of average discharge voltage (V), an average value of the six discharge voltage measurements obtained in the discharge region R1 (depth of discharge = 10% to 60%), out of the ten discharge voltage measurements each obtained at a 10% increase of the depth of discharge (%) in the discharge step 3 (current at the time of the discharging = 1 C), was calculated. The "Pre-cycle (1 C)" column under "Average discharge voltage" in Table 1 gives the third kind of average discharge voltage.

In a case of calculating the fourth kind of average discharge voltage (V), an average value of the six discharge voltage measurements obtained in the discharge region R1, out of the ten discharge voltage measurements each obtained at a 10% increase of the depth of discharge (%) in the discharge step 4 (current at the time of the discharging = 1 C), was calculated. The "Post-cycle (1 C)" column under "Average discharge voltage" in Table 1 gives the fourth kind of average discharge voltage.

(Calculation of Two Kinds of Average Discharge Voltage Retention Rates)

In a case of calculating a first kind of average discharge voltage retention rate (%), the following calculation was performed. Average discharge voltage retention rate (%) = [average discharge voltage for the discharge step 3 where the current at the time of the discharging was 1 C / average discharge voltage for the discharge step 1 where the current at the time of the discharging was 0.05 C] × 100. The "Pre-cycle" column under "Average discharge voltage retention rate" in Table 1 gives the first kind of average discharge voltage retention rate.

In a case of calculating a second kind of average discharge voltage retention rate (%), the following calculation was performed. Average discharge voltage retention rate (%) = [average discharge voltage for the discharge step 4 where the current at the time of the discharging was 1 C / average discharge voltage for the discharge step 3 where the current at the time of the discharging was 1 C] × 100. The "Pre- to post-cycle" column under "Average discharge voltage retention rate" in Table 1 gives the second kind of average discharge voltage retention rate.

[Table 1]

Table 1 (Positive electrode active material: $LiMn_{0.70}Fe_{0.30}Mg_{0.03}PO_4$; Negative electrode active material: $Li_4Ti_5O_{12}$)

| Experiment example | Electrochemical capacity | End-of-charge electrode | Amount of addition (wt%) | Content (wt%) | Average particle diameter (nm) | Capacity retention rate (%) | Average discharge voltage (V) | | | | Average discharge voltage retention rate (%) | |
|---|---|---|---|---|---|---|---|---|---|---|---|---|
| | | | | | | | Pre-cycle (0.05 C) | Post-cycle (0.05 C) | Pre-cycle (1 C) | Post-cycle (1 C) | Pre-cycle | Pre- to post-cycle |
| 1 | Positive electrode ≥ Negative electrode | Negative electrode | 10.0 | 2.7 | 30 | 99.3 | 2.50 | 2.50 | 2.45 | 2.45 | 98.0 | 100.0 |
| 2 | | | 10.0 | 2.7 | 60 | 99.2 | 2.50 | 2.50 | 2.45 | 2.44 | 98.0 | 99.6 |
| 3 | | | 10.0 | 2.7 | 100 | 98.9 | 2.50 | 2.50 | 2.45 | 2.43 | 98.0 | 99.2 |
| 4 | | | 10.0 | 2.7 | 110 | 98.5 | 2.49 | 2.46 | 2.27 | 2.14 | 91.2 | 94.3 |
| 5 | Positive electrode < Negative electrode | Positive electrode | 10.0 | 2.7 | 30 | 97.7 | 2.49 | 2.49 | 2.42 | 2.41 | 97.2 | 99.6 |
| 6 | | | 10.0 | 2.7 | 60 | 94.0 | 2.49 | 2.48 | 2.38 | 2.35 | 95.6 | 98.7 |
| 7 | | | 10.0 | 2.7 | 100 | 88.0 | 2.48 | 2.42 | 2.25 | 2.16 | 90.7 | 96.0 |
| 8 | | | 10.0 | 2.7 | 110 | 86.1 | 2.48 | 2.41 | 2.17 | 2.07 | 87.5 | 95.4 |

[Discussion]

As described in Table 1, as a result of forming the secondary particles P2 including the carbon material 2 by adding the carbon source upon the synthesis of the positive electrode active material particles 1 (the lithium-manganese phosphate compound), the positive electrode active material particles 1 (the primary particles P1) having an average particle diameter of less than or equal to 100 nm were obtained.

Here, in a case where a condition that the electrochemical capacity per unit area of the negative electrode 34 was less than or equal to the electrochemical capacity per unit area of the positive electrode 33 and the average particle diameter of the positive electrode active material particles 1 was less than or equal to 100 nm was satisfied (Experiment examples 1 to 3), both of the pre-cycle average discharge voltage retention rate and the pre- to post-cycle average discharge voltage retention rate were markedly high, in contrast to a case where the condition was not satisfied (Experiment examples 4 to 8).

In particular, in the case where the above-described condition was satisfied, the pre-cycle average discharge voltage retention rate and the pre- to post-cycle average discharge voltage retention rate each increased if the average particle diameter of the positive electrode active material particles 1 was less than or equal to 60 nm.

<Experiment Examples 9 to 12>

The positive electrode active material, i.e., the positive electrode active material particles 1 were synthesized and the secondary battery was fabricated by a similar procedure except that the content (wt%) of the carbon material 2 was varied with the amount of addition (wt%) of the carbon source, as described in Table 2. Then, the battery characteristics were evaluated.

[Table 2]

Table 2 (Positive electrode active material: $LiMn_{0.70}Fe_{0.30}Mg_{0.03}PO_4$; Negative electrode active material: $Li_4Ti_5O_{12}$; Electrochemical capacity: positive electrode $\geq$ negative electrode; End-of-charge electrode: negative electrode)

| Experiment example | Amount of addition (wt%) | Content (wt%) | Average particle diameter (nm) | Capacity retention rate (%) | Average discharge voltage (V) | | | | Average discharge voltage retention rate (%) | |
|---|---|---|---|---|---|---|---|---|---|---|
| | | | | | Pre-cycle (0.05 C) | Post-cycle (0.05 C) | Pre-cycle (1 C) | Post-cycle (1 C) | Pre-cycle | Pre- to post-cycle |
| 9 | 3.5 | 1.2 | | 97.9 | 2.49 | 2.48 | 2.32 | 2.27 | 93.2 | 97.8 |
| 10 | 4.0 | 1.4 | | 99.0 | 2.50 | 2.50 | 2.44 | 2.44 | 97.6 | 100.0 |
| 1 | 10.0 | 2.7 | 30 | 99.3 | 2.50 | 2.50 | 2.45 | 2.45 | 98.0 | 100.0 |
| 11 | 20.0 | 4.8 | | 99.5 | 2.50 | 2.50 | 2.44 | 2.44 | 97.6 | 100.0 |
| 12 | 40.0 | 8.5 | | 100.0 | 2.46 | 2.46 | 2.39 | 2.39 | 97.2 | 100.0 |

As described in Table 2, as a result of varying the content of the carbon material 2, the four kinds of average discharge voltages and the two kinds of average discharge voltage retention rates each varied with the variation in the content of the carbon material 2. In this case, both of the pre-cycle average discharge voltage retention rate and the pre- to post-cycle average discharge voltage retention rate increased if the content of the carbon material 2 was from 1.4 wt% to 4.8 wt% both inclusive (Experiment examples 1, 10, and 11).

[Conclusion]

Based upon the above, in the case where the electrochemical capacity per unit area of the negative electrode was less than or equal to the electrochemical capacity per unit area of the positive electrode, the cyclability characteristic and the discharge voltage characteristic were improved if the positive electrode active material particles 1 (the primary particles P1) included in the positive electrode included the lithium-manganese phosphate compound and the average particle diameter of the positive electrode active material particles 1 was less than or equal to 100 nm. Accordingly, the secondary battery achieved superior battery characteristics.

Although the technology has been described above with reference to some embodiments and Examples, embodiments of the technology are not limited to those described with reference to the embodiments and the Examples above, and are therefore modifiable in a variety of ways.

Specifically, although the description has been given of the secondary batteries of the cylindrical type, the laminated-film type, and the coin type, this is non-limiting. For example, the secondary battery may be of another type such as a prismatic type.

Moreover, regarding the secondary batteries of the cylindrical type and the laminated-film type, although the description has been given of the case where the battery device has a wound structure, this is non-limiting. For example, the battery device may have any other structure such as a stacked structure.

The effects described herein are mere examples, and effects of the technology are therefore not limited to those described herein. Accordingly, the technology may achieve any other effect.

It should be understood that those skilled in the art would make various modifications, combinations, sub-combinations, and alterations depending on design requirements and other factors, and they are within the scope of the attached claims or the equivalents thereof.

**Claims**

1. A secondary battery comprising:

   a positive electrode including primary particles that each include a lithium-manganese phosphate compound and that have an average particle diameter of less than or equal to 100 nanometers;
   a negative electrode having an electrochemical capacity per unit area of less than or equal to an electrochemical capacity per unit area of the positive electrode; and
   an electrolytic solution,

   the lithium-manganese phosphate compound being represented by Formula (1) below,

   $$Li_xMn_yM1_{1-y}PO_4 \ ......\ \ \ \ \ \ \ \ \ \ (1)$$

   where

   M1 is at least one of magnesium (Mg), aluminum (Al), boron (B), cobalt (Co), chromium (Cr), copper (Cu), molybdenum (Mo), nickel (Ni), silicon (Si), tin (Sn), strontium (Sr), titanium (Ti), vanadium (V), tungsten (W), zinc (Zn), zirconium (Zr), or iron (Fe), and
   x and y satisfy $0 < x < 1.2$ and $0 < y \leq 1$.

2. The secondary battery according to claim 1, wherein y in the Formula (1) satisfies $y \geq 0.5$.

3. The secondary battery according to claim 1 or 2, wherein the average particle diameter of the primary particles is less than or equal to 60 nanometers.

4. The secondary battery according to any one of claims 1 to 3, wherein the positive electrode further includes a carbon material that covers a surface of each of the primary particles.

**5.** The secondary battery according to claim 4, wherein
the primary particles covered with the carbon material form secondary particles, and
a content of the carbon material in the secondary particles is higher than or equal to 1.4 percent by weight and lower than or equal to 4.8 percent by weight.

**6.** The secondary battery according to any one of claims 1 to 5, wherein the negative electrode includes at least one of a titanium oxide, a lithium-titanium composite oxide, a hydrogen-titanium compound, a lithium-niobium composite oxide, a hydrogen-niobium compound, or a titanium-niobium composite oxide.

[ FIG. 1 ]

FIG. 1

[ FIG. 2 ]

FIG. 2

[ FIG. 3 ]

FIG. 3

[ FIG. 4 ]

FIG. 4

[ FIG. 5 ]

FIG. 5

[ FIG. 6 ]

FIG. 6

[ FIG. 7 ]

FIG. 7

[ FIG. 8 ]

FIG. 8

[ FIG. 9 ]

FIG. 9

[ FIG. 10 ]

FIG. 10

## INTERNATIONAL SEARCH REPORT

| International application No. |
| --- |
| PCT/JP2018/035975 |

**A. CLASSIFICATION OF SUBJECT MATTER**
Int. Cl. H01M10/052(2010.01)i, H01M4/36(2006.01)i, H01M4/48(2010.01)i,
H01M4/485(2010.01)i, H01M4/58(2010.01)i, H01M10/0566(2010.01)i

According to International Patent Classification (IPC) or to both national classification and IPC

**B. FIELDS SEARCHED**

Minimum documentation searched (classification system followed by classification symbols)
Int. Cl. H01M10/052, H01M4/36, H01M4/48, H01M4/485, H01M4/58, H01M10/0566

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-209463 A (TOSHIBA CORP.) 06 November 2014, & US 2014/0295276 A1 & EP 2784855 A1 & CN 104078674 A | 1-6 |
| A | JP 2012-204015 A (SUMITOMO OSAKA CEMENT CO., LTD.) 22 October 2012, & US 2013/0337333 A1 & US 2016/0079587 A1 & WO 2012/128215 A1 | 1-6 |
| A | JP 2010-251302 A (SUMITOMO OSAKA CEMENT CO., LTD.) 04 November 2010, & US 2012/0003540 A1 & WO 2010/109869 A1 & EP 2413402 A1 & CA 2755802 A1 & KR 10-2011-0132566 A & CN 102356488 A | 1-6 |

☒ Further documents are listed in the continuation of Box C.     ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 05.11.2018 | 20.11.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/035975 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-517053 A (DOW GLOBAL TECHNOLOGIES LLC) 26 May 2011, & JP 2014-130840 A & US 2011/0012067 A1 & US 2014/0295275 A1 & WO 2009/127901 A1 & WO 2009/144600 A2 & CA 2719017 A1 & KR 10-2011-0005854 A & CN 102007070 A | 1-6 |
| A | JP 2004-87319 A (SONY CORP.) 18 March 2004 (Family: none) | 1-6 |
| A | JP 2016-81798 A (TOYOTA MOTOR CORP.) 16 May 2016 (Family: none) | 1-6 |
| A | JP 2013-127845 A (NISSAN MOTOR CO., LTD.) 27 June 2013, & KR 10-2013-0069473 A | 1-6 |

Form PCT/ISA/210 (continuation of second sheet) (January 2015)

**EP 3 859 855 A1**

REFERENCES CITED IN THE DESCRIPTION

**Patent documents cited in the description**

- JP 2012104290 A